# EUROPEAN PATENT SPECIFICATION

(11) **EP 0 627 165 B1**
(45) Date of publication and mention of the grant of the patent: **12.08.1998**
(21) Application number: 94107844.6
(22) Date of filing: 20.05.1994
(51) Int. Cl.: A01N 63/04

(54) **Combined use of chemicals and microbials in cockroach control**
Kombinierte Anwendung von Chemikalien und Mikroorganismen in der Bekämpfung von Schaben
Emploi combiné de produits chimiques et de micro-organismes pour la cette contre les blattes

(30) Priority: 02.06.1993 US 71129
(43) Date of publication of application: 07.12.1994
(73) Proprietor: Bayer Corporation, Pittsburgh, PA 15205-9741 (US)
(72) Inventor: Schwarz, Michael R., Overland Par, KS 66223 (US); Johns, Cathleen L., Kansas City, MO 64138 (US)
(74) Representative: Schumacher, Günter, Dr.

(56) References cited:
- EP-A- 0 163 855
- WO-A-90/10389
- CA-A- 2 086 351
- DE-A- 4 238 311
- US-A- 4 751 082

## Description

### BACKGROUND OF THE INVENTION

The present invention relates to a method for exterminating insects, particularly cockroaches and to compositions useful in such extermination.

A number of chemicals which kill insects at specific concentrations are known. Specific examples of such chemicals include cyfluthrin (disclosed e.g., in U.S. Patent 4,218,469), propoxur (disclosed e.g., in U.S. Patent 3,111,539), fenvalerate (disclosed e.g., in U.S. Patent 4,061,664), isofenphos (disclosed e.g., in U.S. Patent 3,621,082), cypermethrin (disclosed in U.S. Patent 4,024,163), and 1-(2-chloro-5-pyridyl methyl)-2-(nitro-imino)imidazolidine (disclosed, e.g. in U.S. Patent 4,742,060).

Certain microbials, specifically some entomophageous fungi are known to be useful in exterminating insects such as cockroaches when present in sufficiently high amounts. See, for example, U.S. Patents 5,057,315 and 5,057,316.

However, each of these known insecticides and fungi has characteristics which make it commercially undesirable. For example, many of the known chemicals and microbials must be used at rates which are too high to be economically or environmentally desirable. Known insecticides and microbials are also often too slow acting to assure success in their practical application with respect to cockroaches. The effectiveness of many of the known insecticides and microbials is dependent upon the specific environment in which they are used and may, therefore, be detrimentally affected by uncontrollable factors.

It has now been found that when specific types of chemicals and entomogenous fungi selected from specific species are used in combination to treat a site infested with cockroaches, unexpected synergism in cockroach control results. When used in combination, the application rates of the chemical can be substantially lower than those which would be used for an individual chemical insecticide alone. The desired effects of the combined chemical and fungus of the present invention are seen in days rather than weeks. Such combinations make it possible to achieve faster, much higher, more predictable and more economical cockroach control.

### SUMMARY OF THE INVENTION

It is an object of the present invention to provide a combination of a chemical agent and a biological material which is an effective cockroach treatment.

It is also an object of the present invention to provide a composition which need not be used in large quantities to be effective.

It is also an object of the present invention to provide a combination of a chemical agent and a biological agent which provides significantly faster and higher levels of cockroach control than either agent alone.

It is another object of the present invention to provide a method for effectively controlling cockroaches.

These and other objects, which will be apparent to those skilled in the art, are accomplished by a composition which includes (1) an effective amount of a chemical selected from nitroguanidines and nitromethylenes, and (2) an entomopathogenic agent with activity against cockroaches, preferably a fungus of the Metarhizium or Paecilomyces or Verticillium species. The chemical is generally present in an amount such that it makes up at least 0.001 percent active ingredients (w/w) in the bait. The fungus is generally used in an amount that induces a low level of cockroach mortality in the absence of a nitroguanidine or nitromethylene. The optimum quantity of fungus will depend upon the particular fungus species and strain involved. The compositions of the present invention are particularly useful in bait formulations.

### BRIEF DESCRIPTION OF THE DRAWINGS

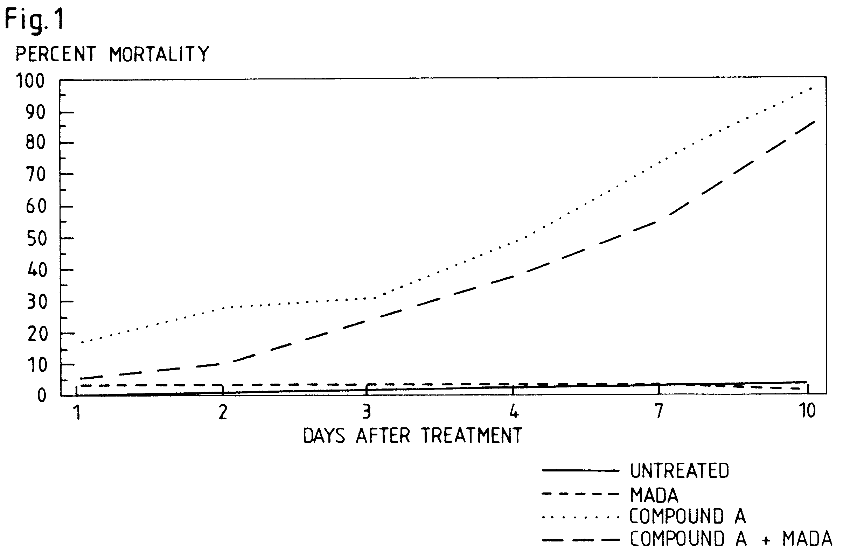

Figure 1 graphically illustrates the percent mortality of cockroaches over a period of 10 days obtained in Example 1 with a bait treated to 0.1% (w/w) of Compound A alone, with the MADA strain of Metarhizium anisopliae and with a bait treated to 0.1% (w/w) of Compound A in combination with the MADA strain.

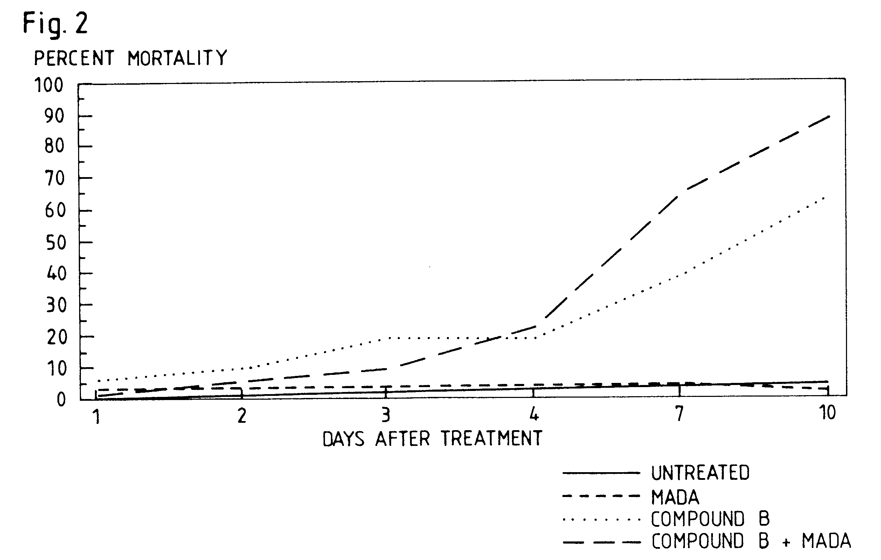

Figure 2 graphically illustrates the percent mortality of cockroaches over a period of 10 days obtained in Example 1 with a bait treated to 0.1% (w/w) of Compound B alone, with the MADA strain of Metarhizium anisopliae and with a combination of the Compound B bait and MADA strain.

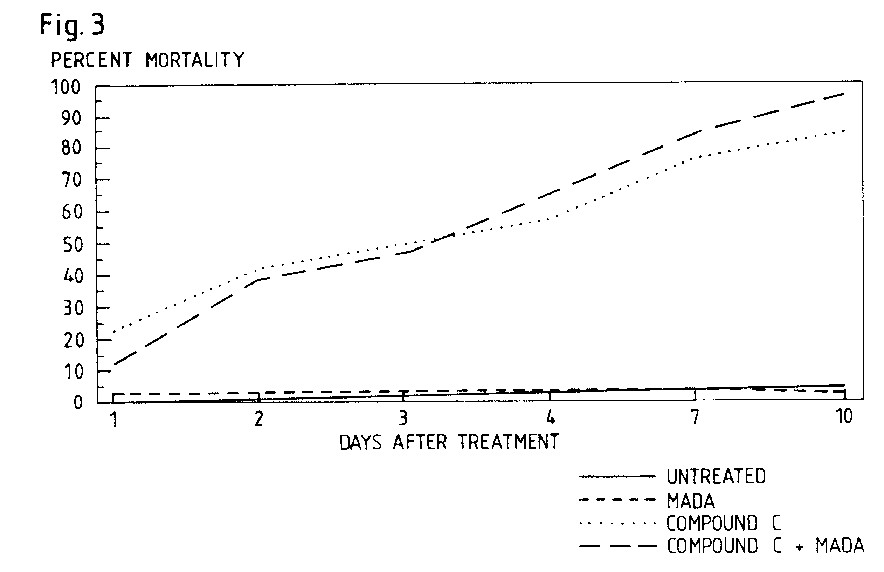

Figure 3 graphically illustrates the percent mortality of cockroaches over a period of 10 days obtained in Example 1 with a bait treated to 0.1% (w/w) of Compound C alone, with the MADA strain of Metarhizium anisopliae, and with a combination of the Compound C bait and the MADA strain.

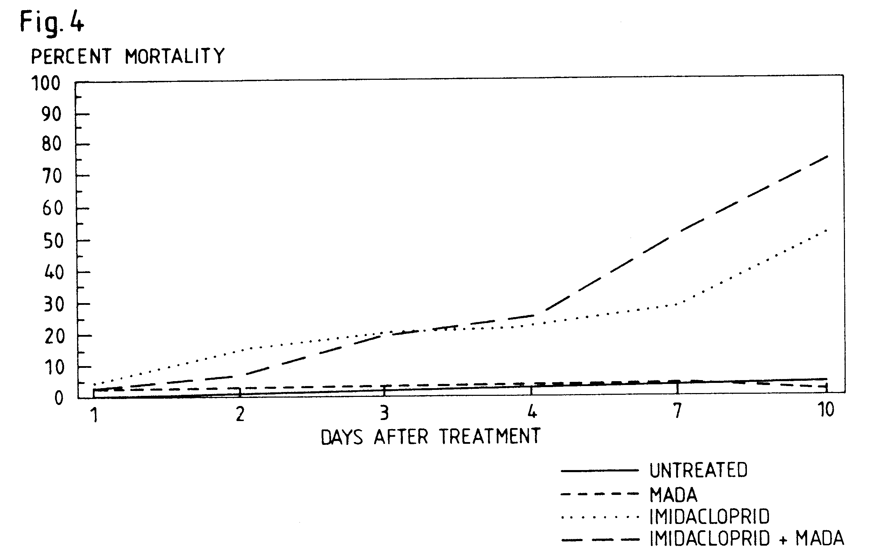

Figure 4 graphically illustrates the percent mortality of cockroaches over a period of 10 days obtained in Example 1 with a bait treated to 0.1% (w/w) of imidacloprid alone, with the MADA strain of Metarhizium anisopliae, and with a combination of the imidocloprid bait plus the MADA strain.

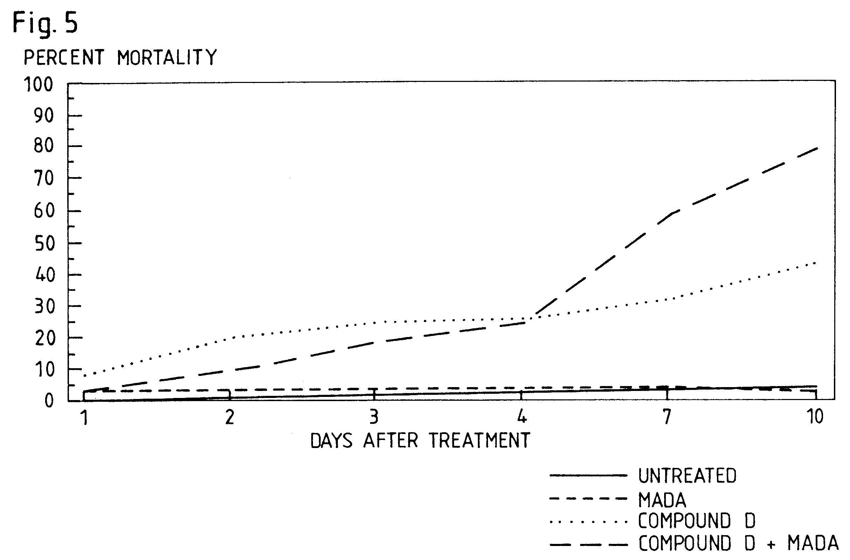

Figure 5 graphically illustrates the percent mortality of cockroaches over a period of 10 days obtained in Example 1 with a bait treated to 0.1% (w/w) of Compound D alone, with the MADA strain of Metarhizium anisopliae, and with a combination of the Compound D bait plus MADA strain.

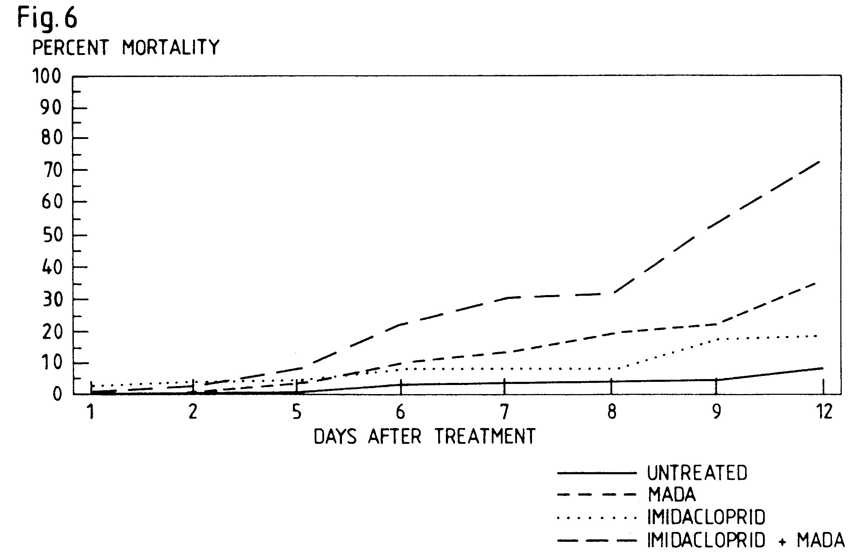

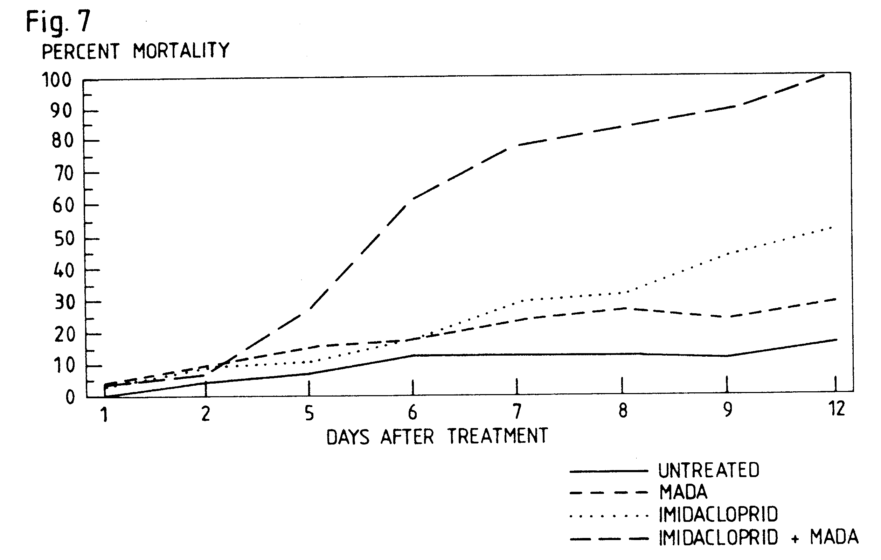

Figures 6 and 7 graphically illustrate the percent mortality of cockroaches over a period of 12 days obtained in Example 2 with a bait treated to 0.1% (w/w) of imidacloprid alone, with the MADA strain of Metarhizium anisopliae, and with a combination of imidacloprid bait and the MADA strain for adult female and adult male cockroaches respectively.

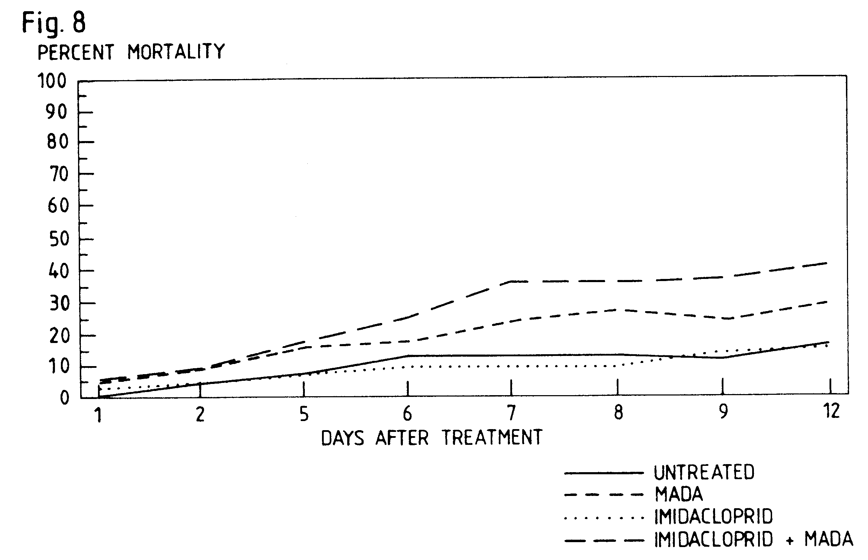

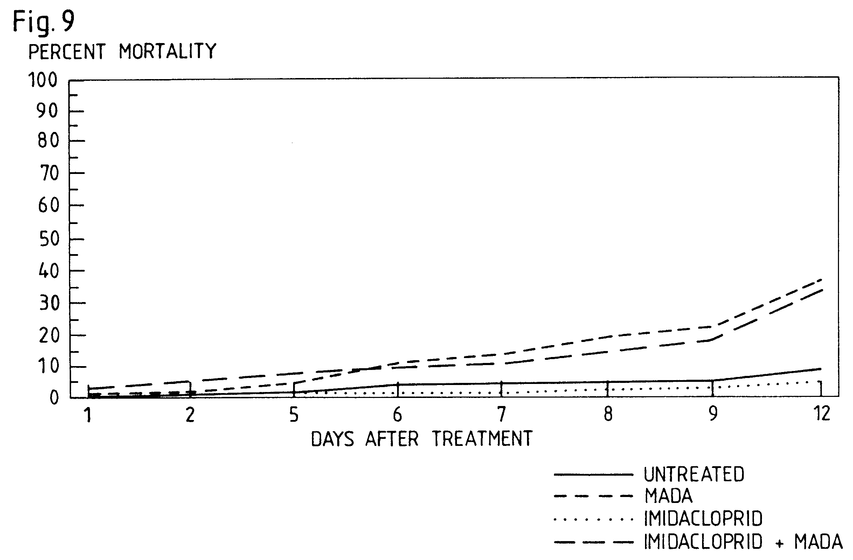

Figures 8 and 9 graphically illustrate the percent mortality of cockroaches over a period of 12 days obtained in Example 2 with a bait treated to 0.001% (w/w) of imidacloprid alone, with the MADA strain of Metarhizium anisopliae, and with a combination of imidacloprid bait and the MADA strain for adult male and female cockroaches respectively.

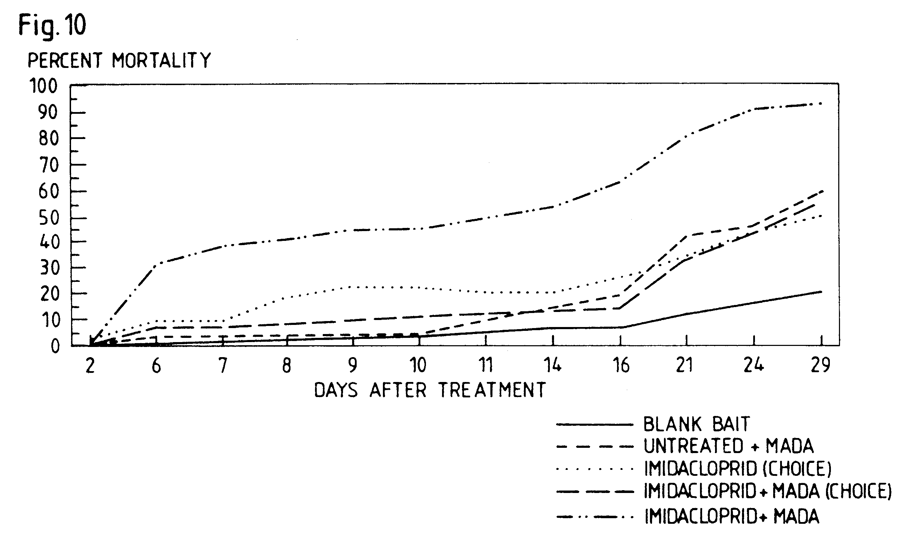

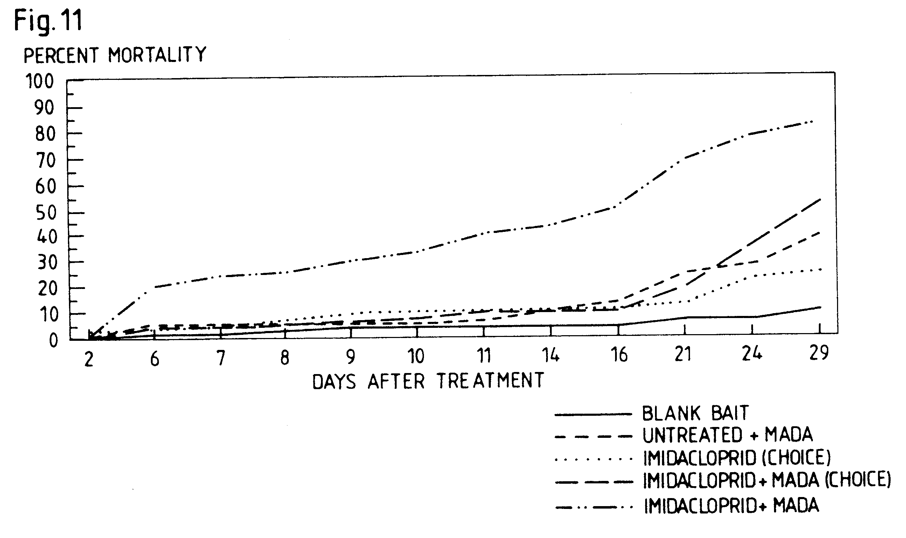

Figures 10 and 11 graphically illustrate the percent mortality of cockroaches over a period of 29 days obtained in Example 3 when the cockroaches are given a choice between non-treated and bait treated to 0.1% (w/w) of imidacloprid alone, with the MADA strain of Metarhizium anisopliae, and with a combination of imidacloprid bait and the MADA strain for adult male and adult female cockroaches respectively.

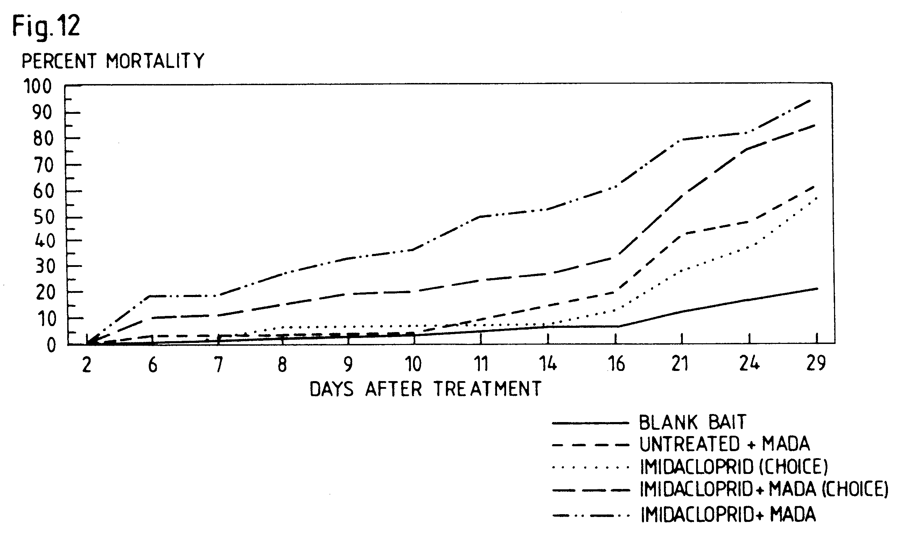

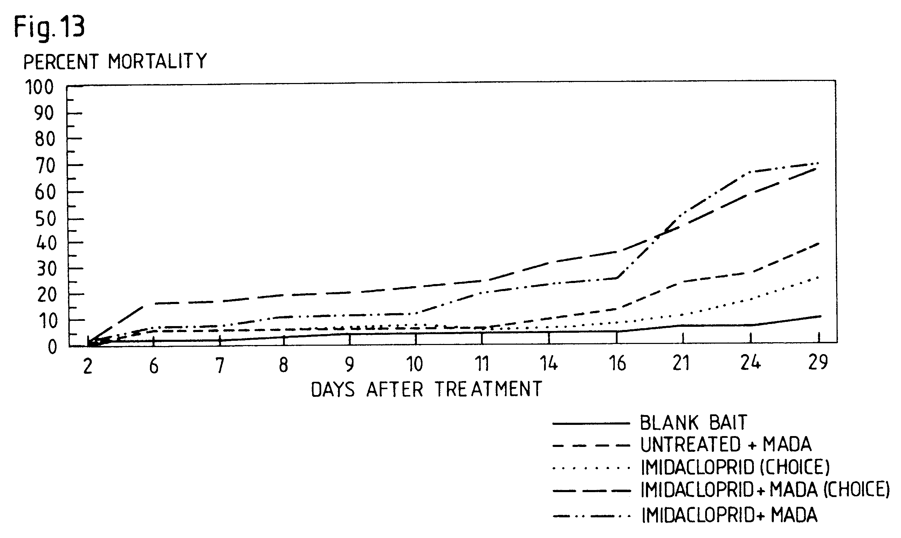

Figures 12 and 13 graphically illustrate the percent mortality of cockroaches over a period of 29 days obtained in Example 3 when the cockroaches are given a choice between non-treated bait and bait treated to 0.05% (w/w) of imidacloprid alone, with the MADA strain of Metarhizium anisopliae, and with a combination of the imidacloprid bait and the MADA strain for adult male and adult female cockroaches respectively.

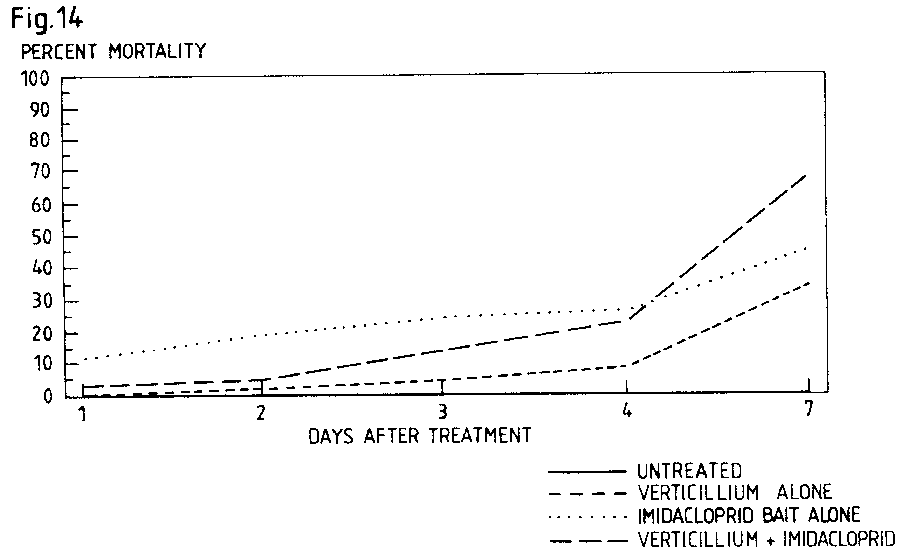

Figure 14 graphically illustrates the percent mortality of cockroaches over a period of 7 days obtained in Example 4 with a bait treated to 0.1% (w/w) of imidacloprid alone, with the entomogenous fungus Verticillium lecanii, and with a combination of the imidacloprid bait and Verticillium lecanii for adult male cockroaches.

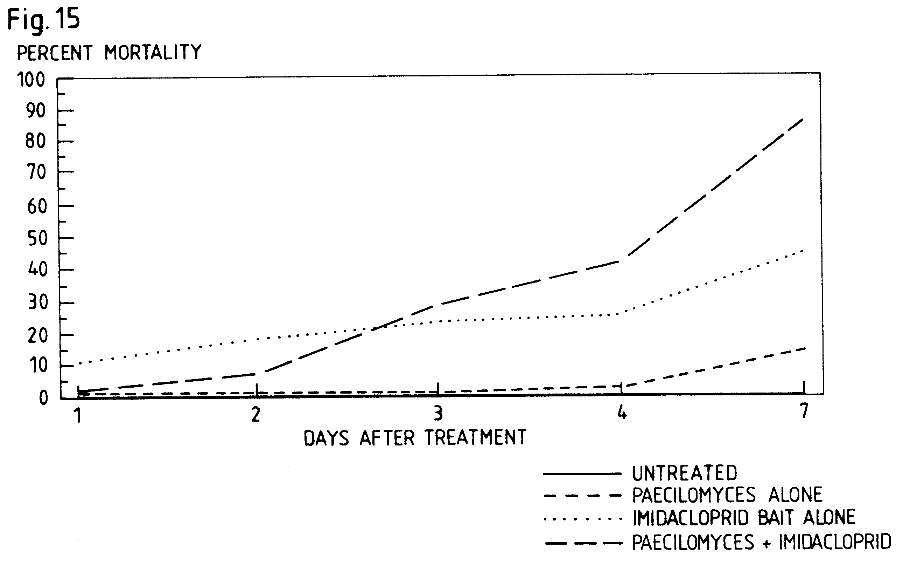

Figure 15 graphically illustrates the percent mortality of cockroaches over a period of 7 days obtained in Example 4 with a bait treated in 0.1% (w/w) of imidacloprid alone, with the entomogenous fungus Paecilomyces fumosoroseus, and with a combination of the imidacloprid bait and the Paecilomyces fumosoroseus for adult male cockroaches.

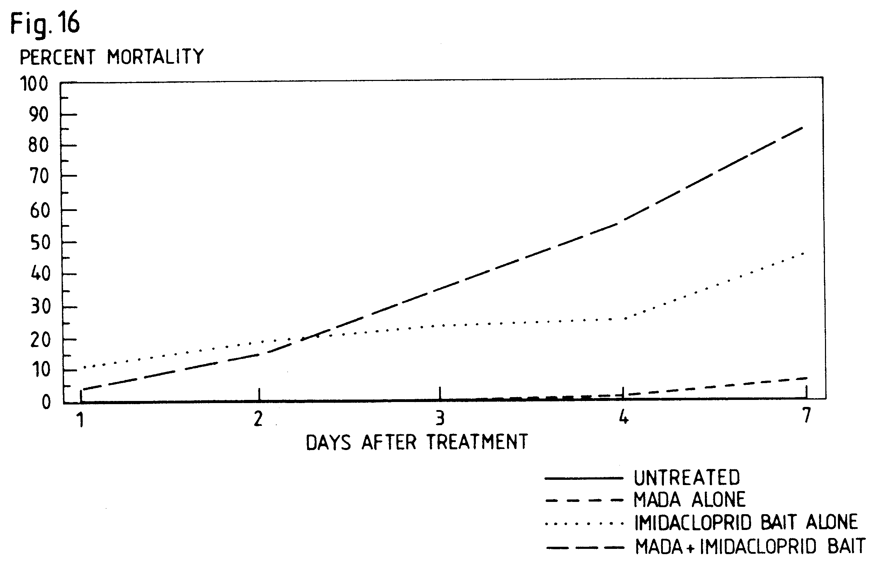

Figure 16 graphically illustrates the percent mortality of cockroaches over a period of 7 days obtained in Example 4 with a bait treated to 0.1% (w/w) of imidacloprid alone, with the entomogenous fungus Metarhizium anisopliae (isolate MADA), and with a combination of the imidacloprid bait and the MADA strain for adult male cockroaches.

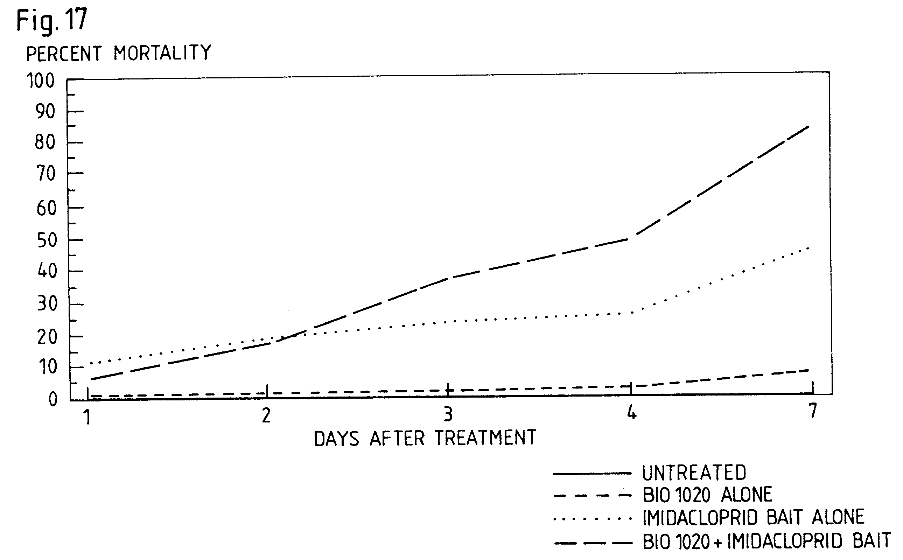

Figure 17 graphically illustrates the percent mortality of cockroaches over a period of 7 days obtained in Example 4 with a bait treated to 0.1% (w/w) of imidacloprid alone, with the entomogenous fungus Metarhizium anisopliae (isolate BIO 1020), and with a combination of the imidacloprid bait and BIO 1020 strain for adult male cockroaches.

### DETAILED DESCRIPTION OF THE PREFERRED EMBODIMENTS OF THE INVENTION

The present invention relates to a composition for exterminating cockroaches which is composed of (1) at least one chemical selected from (a) nitroguanidines such as 1-(2-chloro-5-pyridylmethyl)-2-(nitroimino) imidazolidine; or (b) nitromethylenes such as 1-(2-chloro-5-pyridylmethyl)-2-(nitromethylene) imidazolidine and (2) a microbial which is an entomopathogenic fungus such as fungus of the Metarhizium or Paecilomyces or Verticillium genus.

The chemicals useful in the practice of the present invention are known materials and may be made by any of the known techniques. Specific nitroguanidines and nitromethylenes and methods for making them are disclosed, for example, in the following published applications and patents: EP 464,830; EP 428,541; EP 425,978; DE 36 39 877; DE 37 12 307; US 5,034,524; EP 386,565; EP 383,091; EP 375,907; EP 364,844; JP 02.207 083; EP 315,826; EP 259,738; EP 254,859; JP 63 307,857; JP 63 287,764; EP235,725; EP 212,600; EP 192,060; EP 163,855; EP154,178; EP 136,636; US 4,948,798; EP 303,570; EP 302,833; US 4,918,086; EP 306,696; FR 2,611,114; EP 183,972; EP 455,000; JP A3 279,359; JP A3,246,283; WO91/17,650; WO 91/104,965; US 5,039,686; EP 135,956; US 5,034,404; EP 471,372; EP 302,389; JP 3,220,176; Brazil 8,803,621; JP 3,246,283; JP A92/9371; and JP 3,255,072.

For example, U.S. Patent 4,742,060 discloses that 1-(2-chloro-5-pyridylmethyl)-2-(nitroimino) imidazolidine may be made by reacting a solution of N-(2-chloro-5-pyridylmethyl) ethylenediamine in toluene with cyanogen bromide at room temperature. The 1-(2-chloro-5-pyridylmethyl)-2-iminoimidazolidine hydrobromide thus formed was further reacted with sulfuric acid and fuming nitric acid. The dichloromethane solvent was removed and the desired 1-(2-chloro-5-pyridylmethyl)-2-(nitroimino) imidazolidine was recovered.

Specific examples of nitroguanidines and nitromethylenes which may be used in the present invention include:
3-(2-chloro-5-pyridylmethyl)-2-(nitroimino)-thiazolidine;
1-(2-chloro-5-pyridylmethyl)-2-(nitroimino)-imidazolidine;
1-(2-chloro-5-pyridylmethyl)-2-(nitromethylene) imidazolidine; 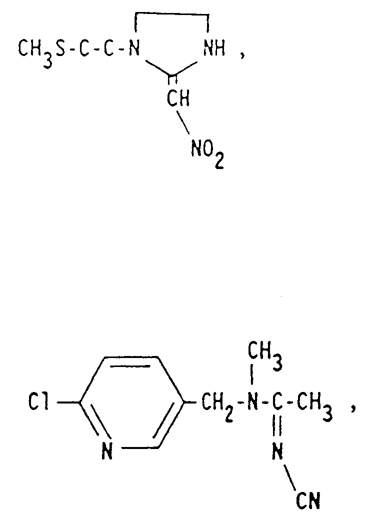 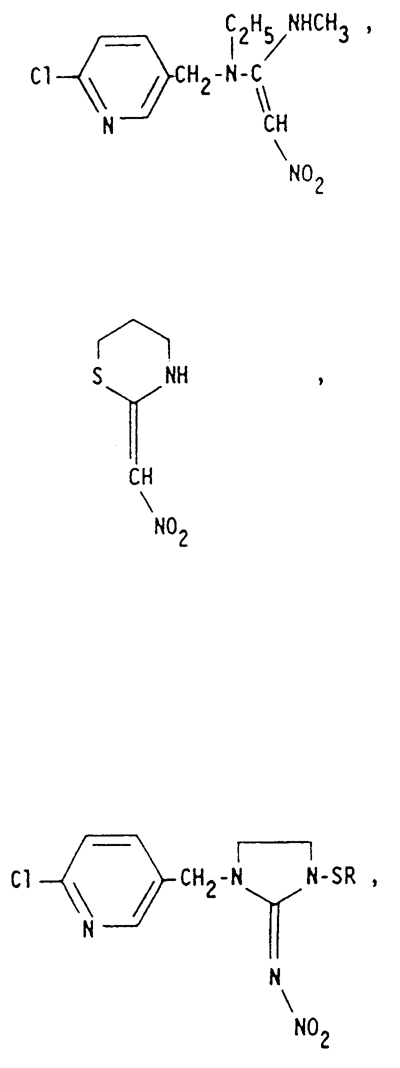
in which
- R: represents hydrogen, an alkyl substituted alkyl, aryl or substituted aryl group,

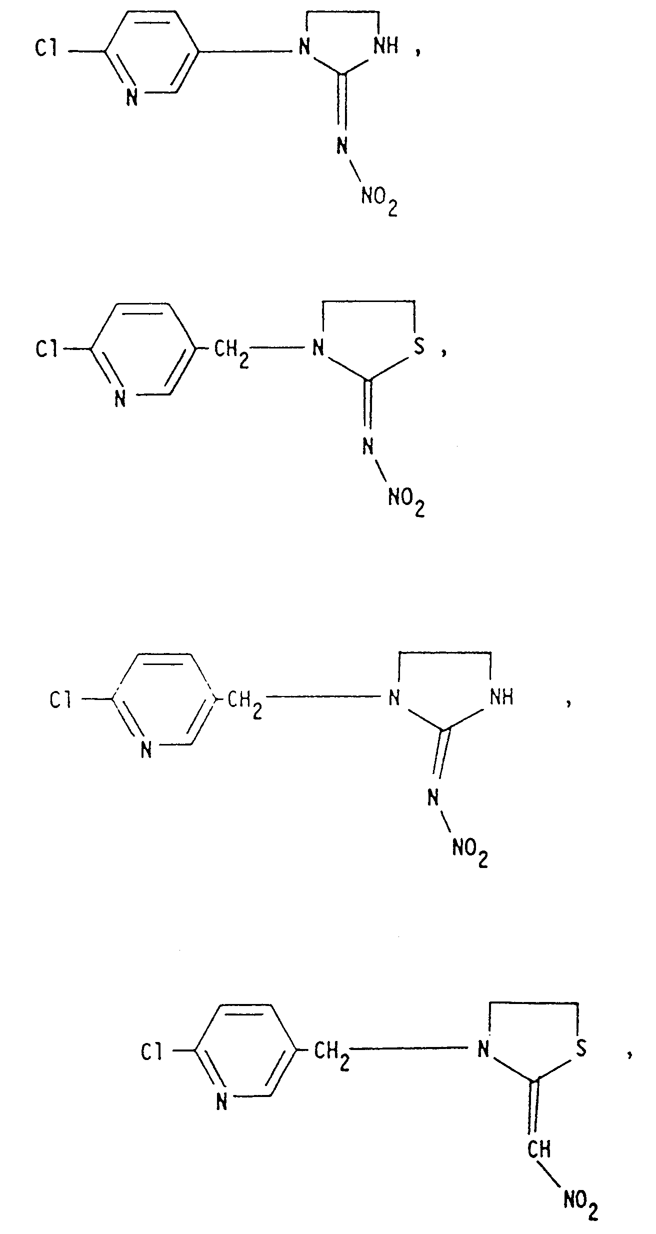

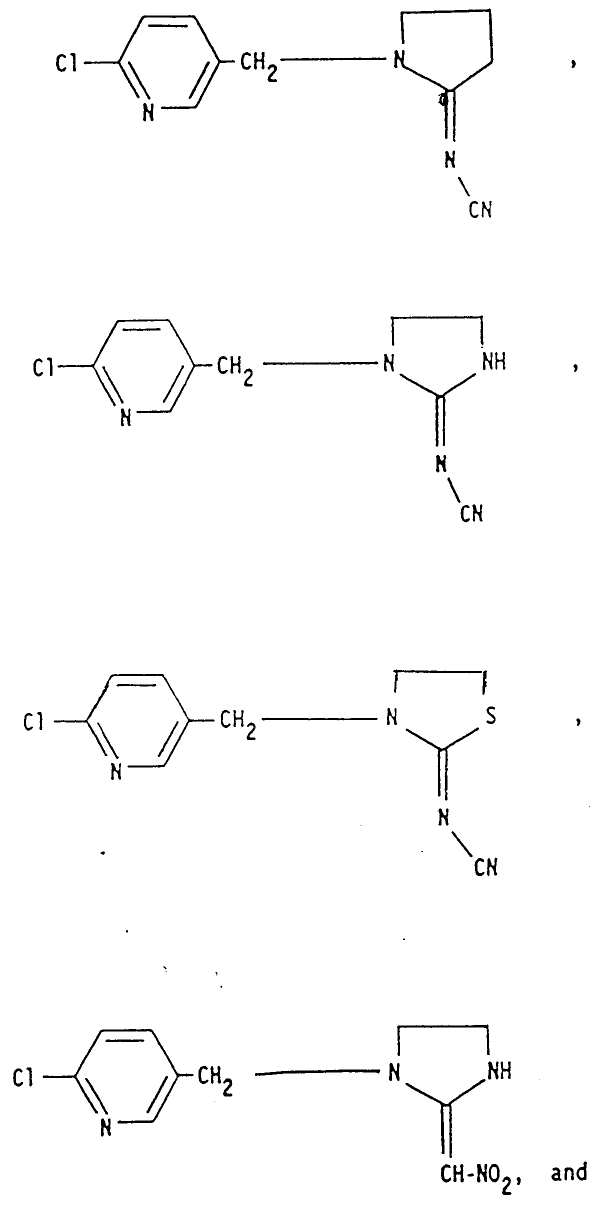

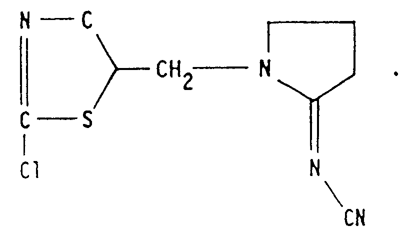

Particularly preferred nitroguanidines and nitromethylenes are 1-(2-chloro-5-pyridylmethyl)-2-(nitroimino)imidazolidine.

When used in the form of a bait, a nitroguanidine or nitromethylene is generally used in a quantity such that it represents at least 0.001% by weight, preferably from about 0.01 to about 0.1% by weight, and most preferably from about 0.05 to about 0.1% by weight of the total bait components.

The fungi employed in the cockroach treatment of the present invention occur naturally in soil and may be readily isolated therefrom.

Species of the genus Metarhizium useful in the present invention occur naturally in soil and may be readily isolated therefrom. Various strains of Metarhizium anisopliae are useful in the present invention. The strains F 52 (BIO 1020, DSM Number 3884) and the MADA strain (received from the University of Florida) (CBS Number 326, Baarn, Netherlands) of Metarhizium anisopliae are most preferred.

Species of the genus Paecilomyces useful in the cockroach treatment of the present invention include Paecilomyces fumosoroseus which naturally occurs in soil and may be readily isolated from soil or from diseased and sporulating insects by methods known to those in the art.

Species of the Verticillium genus are also useful in the practice of the present invention. These species occur naturally in soil and may be readily isolated from soil or from diseased insects by methods known to those in the art.

The fungus should generally be present in an amount and form such that it induces low levels of cockroach mortality. The optimum amount will, of course, depend on the species used.

The insecticidal chemical component of the cockroach treatment of the present invention may be applied to baits or surfaces in the form of a powder, liquid, solution, suspension, emulsion, foam, paste, granules, aerosols, natural and synthetic materials impregnated with active compound and microbial (i.e., fungus or nematode) and very fine capsules in polymeric substances. When in powder, liquid, or granular form, the microbial component may be added to any solid surface in the vicinity of the insecticidal chemical component so that the cockroach also receives an appropriate amount of propagules suitable to cause disease.

Known additives for cockroach exterminating compositions such as extenders, attractants, feeding stimulants, and pheromones may optionally be included in the final composition. Examples of suitable powder vehicles include clay, talc, lime and pyrophyllite. Liquid formulations of the chemical and/or microbial agent may also include lignins, hydrocelluloses, bentonites, pectins, or any other material which causes the formulation to solidify after application.

The chemical compound and the microbial could be sequentially applied to the medium or treated area. When this technique is used, either the chemical compound or the microbial may be applied first. The interval between application of the chemical and microbial may be as short as a few minutes or as long as a few days or even a few weeks. If an appropriate strain of the fungus is already present as a naturally occurring material with the necessary spore or propagule titer on the medium to be treated, addition of fungus is unnecessary and only the chemical compound needs to be applied. These treatments may also be made repeatedly in regular or irregular intervals to assure long-lasting effect.

The cockroach exterminating compositions of the present invention are effective against all types of cockroaches but have been found to be particularly effective against the German cockroach Blatella germanica.

Having thus described our invention, the following examples are given as being illustrative thereof. All parts and percentages given in these examples are parts by weight and percentages by weight, unless otherwise indicated.

### EXAMPLES

### EXAMPLE 1

This experiment was conducted to demonstrate the activity of several different nitromethylene compounds alone at a concentration of 0.1% (w/w) and in combination with the isolate of the entomogenous fungus Metarhizium anisonliae designated MADA. The nitromethylenes used in this example were as follows:

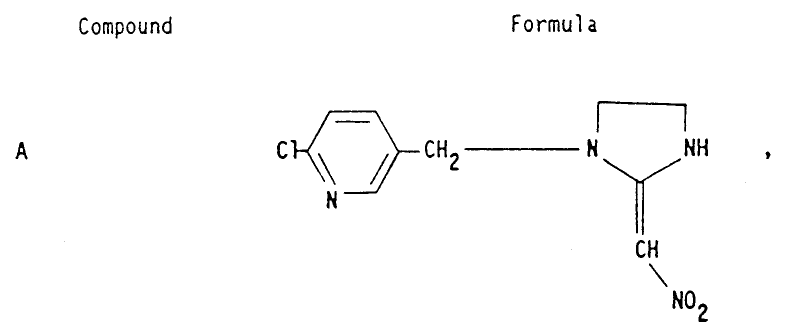

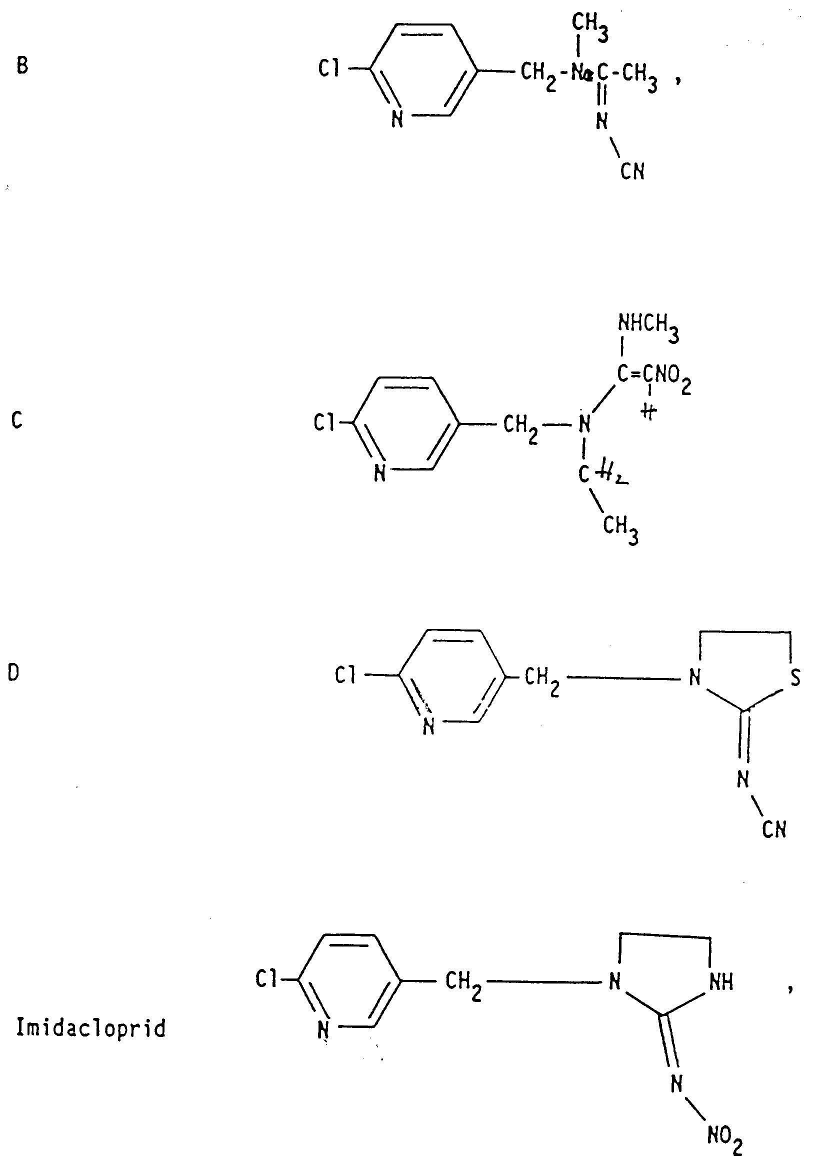

Dog food chunks (Purina Dog Chow) were ground to a coarse consistency and then sprayed with a solution of insecticide as it was being mixed. Petri dishes (9 cm diameter) containing water agar were inoculated with 0.5 g/dish of MADA granules and maintained at room temperature. The granules produced conidia over the entire agar surface within 4 days. Preliminary tests showed a rate of 0.01 to 1.0 g granules per Petri dish caused statistically equivalent mortality.

Traps were constructed by placing a cup containing the nitromethylene-treated dog food on the center of the lower half of each MADA containing Petri dish. The MADA containing Petri dish bottom was then covered with an inverted cup containing two entrance holes. One of these bait traps was set in the center of each test box containing 50 adult male cockroaches Blatella germanica. Each of the test boxes included a water source and cardboard housing. The percent mortality was tabulated periodically for 10 days after the test was begun.

The results of these tests are graphically shown in Figure 1 (Compound A), Figure 2 (Compound B), Figure 3 (Compound C), Figure 4 (imidacloprid), and Figure 5 (Compound D).

MADA alone did not induce noticeable mortality of cockroaches during the duration of this test. The mortality of MADA alone was not significantly different from untreated water agar plates. All nitromethylene compounds, except Compound A (Fig. 1) in combination with MADA induced cockroach mortality which was 10-33% greater than the sum of mortalities caused by the nitromethylene plus fungus alone.

### EXAMPLE 2

These tests were done to evaluate the activity of imidacloprid at concentrations of 0.001% and 0.1% (w/w) alone and in combination with the MADA strain of Metarhizium anisopliae with respect to the cockroach Blatella germanica.

Dog food chunks (Purina Dog Chow) were ground to a coarse consistency. A solution of either 0.001% or 0.1% imidacloprid was sprayed on the pieces of dog food during grinding and mixing.

Petri dishes (9 cm diameter) containing water agar were inoculated with 1 g/dish of MADA granules and maintained at room temperature. Conidia were produced within 4 days.

Traps were constructed by placing a cup containing approximately 2 grams of the imidacloprid-treated dog food on the center of the lower half of a MADA containing Petri dish. The bottom of the MADA containing Petri dishes was then covered by an inverted cup containing two entrance holes. Non-inoculated water agar Petri dishes and dog food which had not been treated with imidacloprid were used as controls.

The traps were placed in the center of a test box containing 50 adult male and 50 adult nongravid female cockroaches. Each test box was furnished with a water source and cardboard housing. The test boxes containing only MADA were also furnished with dog food which had not been treated with imidacloprid. The test boxes containing only imidacloprid-treated dog food and the test boxes containing MADA and imidacloprid-treated dog food were not furnished with an alternate food source.

The percent mortality was periodically tabulated for males and females over a period of 12 days. The results of these tests are graphically illustrated in Figures 6-9.

Figures 6 and 7 (imidacloprid at 0.1% concentration) clearly illustrate that the combination of imidacloprid and Metarhizium anisopliae is much more effective in controlling cockroaches (both male and female) than either the imidacloprid or the fungus individually. Figures 8 and 9 (imidacloprid at 0.001% concentration) indicate that at the lower concentration, i.e., 0.001%, the effectiveness of the combination is not as significantly better than the effect of the sum of the percent mortality of fungus alone plus percent mortality of nitromethylene alone.

### EXAMPLE 3

This test was done to evaluate the effectiveness of imidacloprid at a concentration of 0.05% as compared to imidacloprid at a concentration of 0.1% in food baits alone and in combination with the MADA strain of Metarhizium anisopliae. This investigation was also done to see whether cockroaches preferred non-treated baits to treated ones ("choice" treatments) by providing a choice between the two food sources.

Dog food chunks (Purina Dog Chow) were soaked thoroughly with either a 0.05% imidacloprid solution or a 0.1% imidacloprid solution until it was saturated. The dog food was then dried for several days under an exhaust hood and ground to a coarse consistency. Dog food soaked in water only which was then dried and ground to a coarse consistency was used as a control and an alternate food source where a choice between two food sources was given.

Petri dishes (9 cm diameter) containing water agar were inoculated with 0.5 g/dish of MADA granules and maintained at room temperature. Conidia was produced within 4 days.

Traps were constructed by placing a cup containing approximately 2 grams of imidacloprid-treated dog food on the center of the lower half of each MADA dish. The dish bottom was then covered with an inverted cup containing two entrance holes. Non-inoculated water agar Petri dishes and dog food which had not been treated with imidacloprid were used as controls.

One trap was set in the center of each test box containing 50 adult male cockroaches (Blatella germanica) and 50 adult nongravid female cockroaches. All test boxes were furnished with a water source and cardboard housing. The percent mortality was periodically tabulated for males and females over a period of 29 days.

The tests conducted were as follows:
a) Untreated control: no fungus and dog food untreated with imidacloprid;
b) Blank control: fungus and dog food treated with insecticide formulation in which no imidacloprid (active ingredient) was present and no alternate food source;
c) MADA alone: fungus but no imidacloprid-treated dog food;
d) dog food treated with 0.05% imidacloprid solution with dog food untreated with imidacloprid given as alternate food source (choice) but no fungus (Figures 12 and 13);
e) dog food treated with 0.1% imidacloprid solution with dog food untreated with imidacloprid given as alternate food source (choice) but no fungus (Figures 10 and 11);
f) MADA plus dog food treated with 0.05% imidacloprid solution with dog food untreated with imidacloprid given as an alternate food source (choice) (Figures 12 and 13);
g) MADA plus dog food treated with 0.1% imidacloprid solution with dog food untreated with imidacloprid given as an alternate food source (choice) (Figures 10 and 11);
h) MADA plus dog food treated with 0.05% imidacloprid solution with no alternate food source (Figures 12 and 13); and
i) MADA plus dog food treated with 0.1% imidacloprid solution with no alternate food source (Figures 10 and 11).

There was no significant difference between the results achieved when "choice" baits containing imidacloprid at 0.5% were compared to non-choice ones (Figures 12 and 13). The combination of imidacloprid plus fungus produced significantly higher mortality rates at both the 0.05 and 0.1% concentrations of imidacloprid than did the use of the corresponding imidacloprid solution alone.

### EXAMPLE 4

This investigation was conducted to demonstrate the synergistic activity of three entomogenous fungal genera, Verticillium sp., Paecilomyces sp. and two isolates of Metarhizium anisopliae designated MADA and BIO 1020, alone and in combination with imidacloprid at a concentration of 0.1% (w/w) for cockroach control.

Dog food chunks (Purina Dog Chow) were ground to a course consistency and then sprayed with a solution of insecticide as it was being mixed. Petri dishes (9 cm diameter) containing potato dextrose agar (PDA) were inoculated with conidial suspensions of Paecilomyces or Verticillium. The surface area of the agar was covered by fungal mycelial growth within 1 week. To inoculate petri dishes with Metarhizium anisopliae isolates, about 0.5g of MADA or BIO 1020 granules were evenly dispersed over the agar surface. Within two weeks, the entire agar surface was covered with conidia produced by the mycelia or granules.

Traps were constructed and test boxes infested with 50 adult male cockroaches (Blatella germanica) as described in EXAMPLE 1. The percent mortality was tabulated periodically for 7 days after the test was begun.

The results of these tests are graphically shown in Figure 14 (Verticillium sp.), Figure 15 (Paecilomyces sp.), Figure 16 (MADA), and Figure 17 (BIO 1020).

Paecilomyces and both Metarhizium anisopliae strains (MADA, BIO 1020) clearly demonstrated cockroach control in combination with imidacloprid which was 25% to 33% greater at 7 days than the sum of mortalities shown by either component alone. Both isolates of Metarhizium anisopliae (MADA and BIO 1020) showed equivalent levels of control alone and synergistic control in combination with imidacloprid. Verticillium plus imidacloprid provided cockroach mortality which was greater than either component alone. No fungal isolate or species alone, except Verticillium, showed cockroach mortality after 7 days which was significantly different from untreated PDA plates.

## Claims

1. A composition for controlling cockroaches comprising (1) an effective amount of a chemical insecticide selected from the group consisting of nitroguanidines and nitromethylenes, and (2) an entomopathogenic fungus.

2. The composition of claim 1 in which the chemical insecticide is a nitromethylene.

3. The composition of claim 1 in which the chemical insecticide is imidacloprid.

4. The composition of Claim 1 in which the fungus is Verticillium lecanii.

5. The composition of Claim 1 in which the fungus is Metarhizium anisopliae.

6. The composition of Claim 1 in which the fungus is Paecilomyces fumosoroseus.

7. A composition useful for extermination of cockroaches which is composed of an effective amount of
(a) at least one compound represented by the formulae 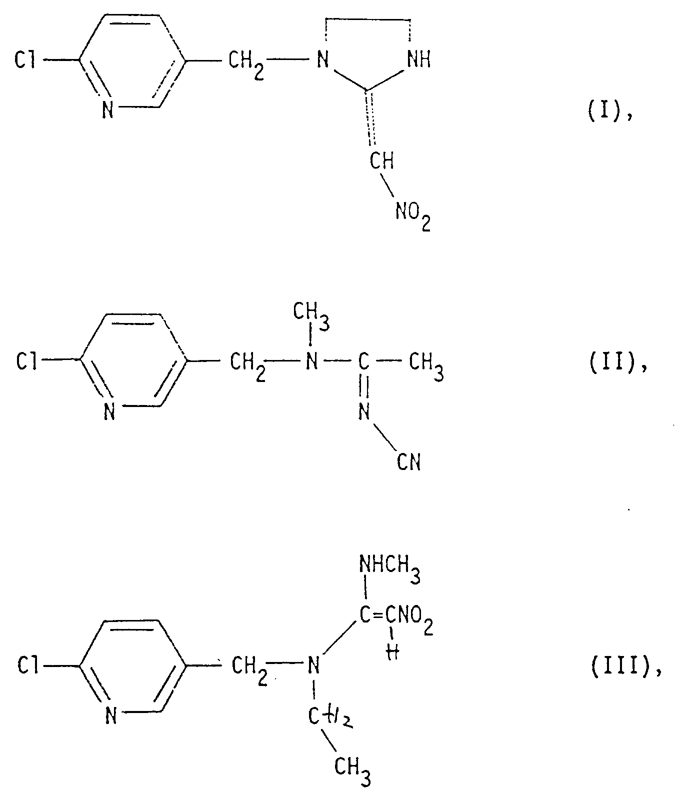 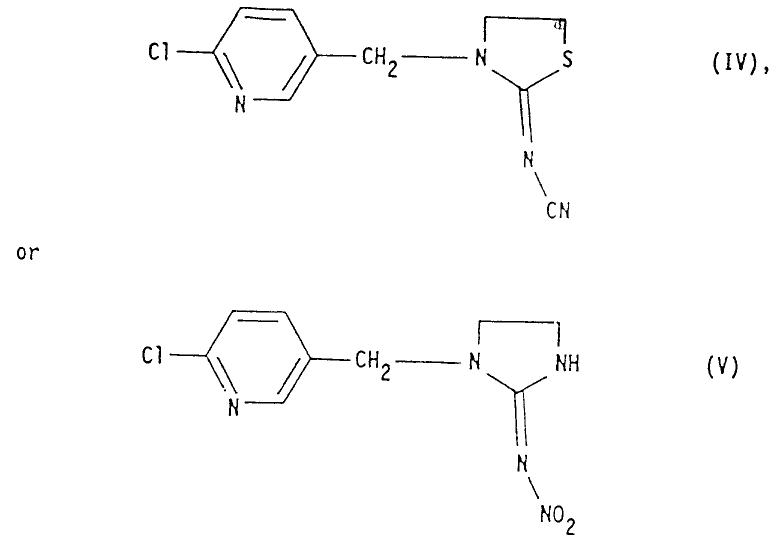 and
(b) an entomopathogenic fungus.

8. The composition of Claim 7 in which (b) is Metarhizium anisopliae.

9. The composition of Claim 7 in which the fungus is Paecilomyces fumosoroseus.

10. The composition of Claim 7 in which (b) is Verticullium lecanii.

11. Use of a composition according to claims 1-10 for the control of cockroaches.

## Patentansprüche

1. Zusammensetzung zur Bekämpfung von Schaben, umfassend (1) eine wirksame Menge eines chemischen Insektizids, das aus der Gruppe ausgewählt ist, die aus Nitroguanidinen und Nitromethylenen besteht, und (2) einen entomopathogenen Pilz.

2. Zusammensetzung gemäß Anspruch 1, wobei das chemische Insektizid ein Nitromethylen ist.

3. Zusammensetzung gemäß Anspruch 1, wobei es sich bei dem chemischen Insektizid um Imidacloprid handelt.

4. Zusammensetzung gemäß Anspruch 1, wobei es sich bei dem Pilz um *Verticillium lecanii* handelt.

5. Zusammensetzung gemäß Anspruch 1, wobei es sich bei dem Pilz um *Metarhizium anisopliae* handelt.

6. Zusammensetzung gemäß Anspruch 1, wobei es sich bei dem Pilz um *Paecilomyces fumosoroseus* handelt.

7. Zusammensetzung, die sich zur Vertilgung von Schaben eignet und die zusammengesetzt ist aus einer wirksamen Menge
(a) wenigstens einer Verbindung, die durch die Formeln 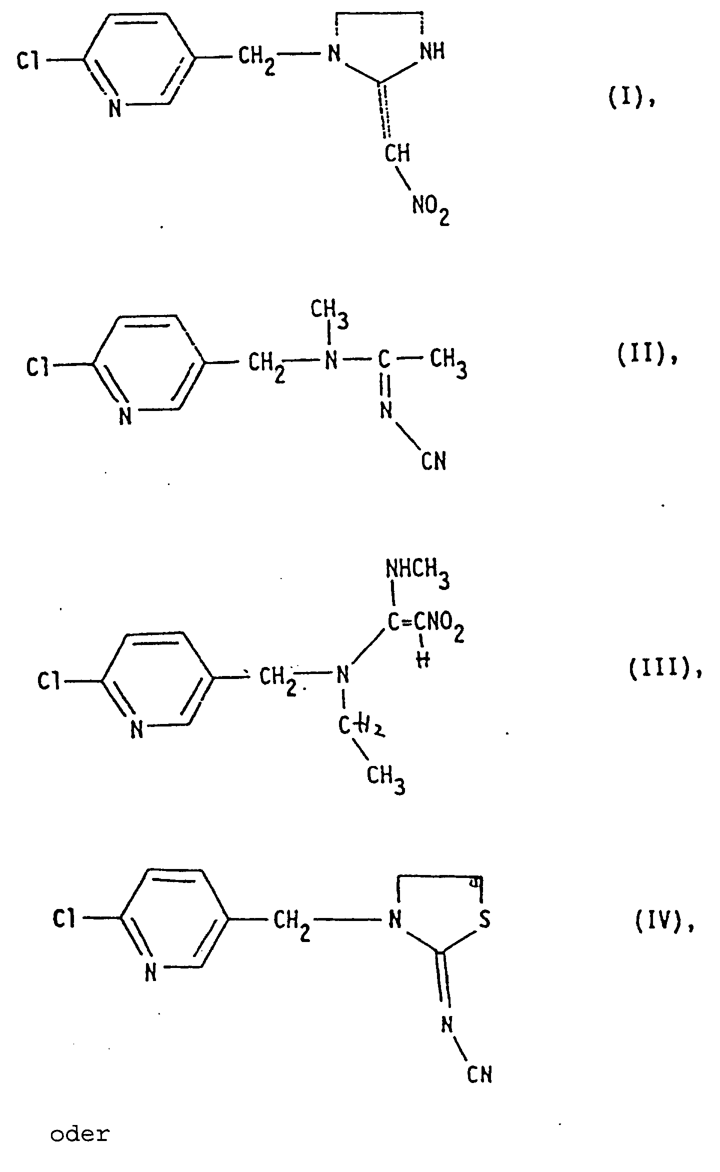 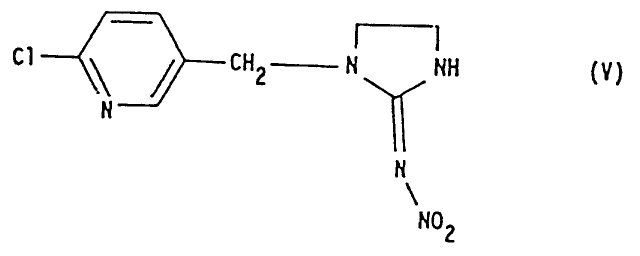 dargestellt wird, sowie
(b) einem entomopathogenen Pilz.

8. Zusammensetzung gemäß Anspruch 7, wobei es sich bei (b) um *Metarhizium anisopliae* handelt.

9. Zusammensetzung gemäß Anspruch 7, wobei es sich bei (b) um *Paecilomyces fumosoroseus* handelt.

10. Zusammensetzung gemäß Anspruch 7, wobei es sich bei (b) um *Verticillium lecanii* handelt.

11. Verwendung einer Zusammensetzung gemäß den Ansprüchen 1-10 zur Bekämpfung von Schaben.

## Revendications

1. Composition destinée à la lutte contre des blattes, comprenant (1) une quantité efficace d'un insecticide chimique choisi dans le groupe consistant en nitroguanidines et nitrométhylènes et (2) un champignon entomopathogène.

2. Composition suivant la revendication 1, dans laquelle l'insecticide chimique est un nitrométhylène.

3. Composition suivant la revendication 1, dans laquelle l'insecticide chimique consiste en imidacloprid.

4. Composition suivant la revendication 1, dans laquelle le champignon est Verticillium lecanii.

5. Composition suivant la revendication 1, dans laquelle le champignon est Metarhizium anisopliae.

6. Composition suivant la revendication 1, dans laquelle le champignon est Paecilomyces fumosoroseus.

7. Composition utile pour l'extermination des blattes, qui est composée d'une quantité efficace
(a) d'au moins un composé représenté par les formules 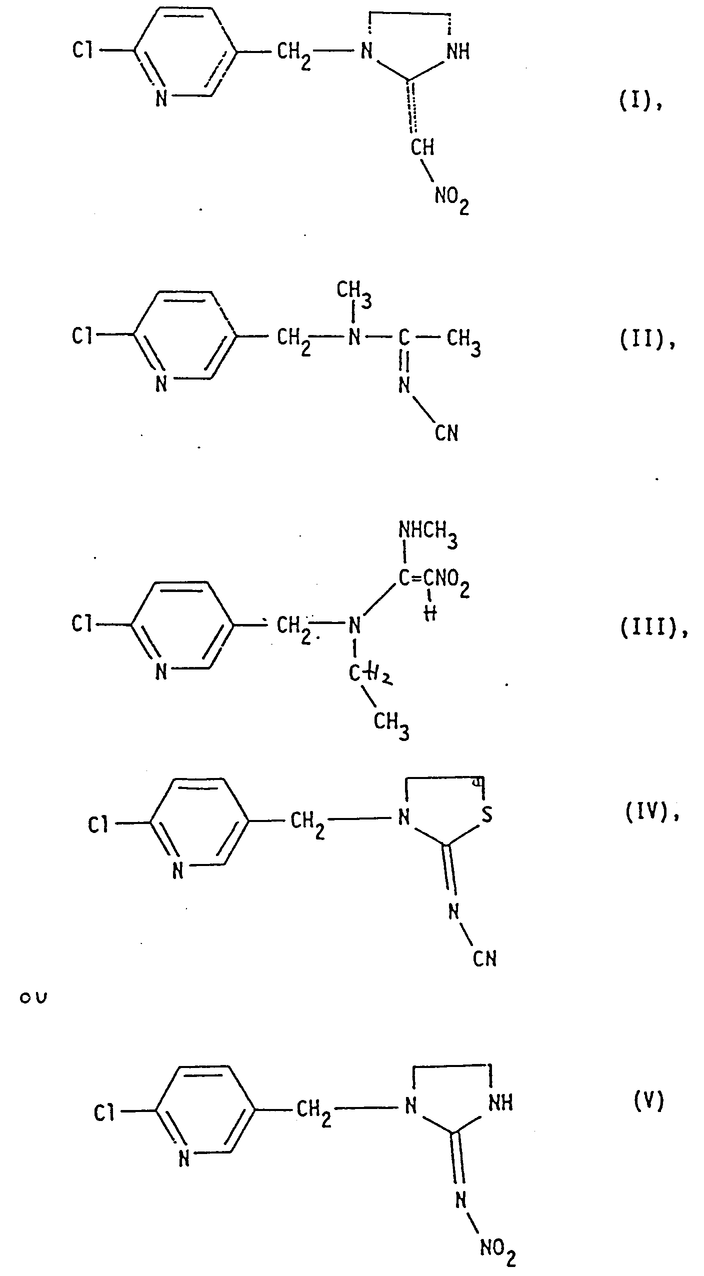 et
(b) un champignon entomopathogène.

8. Composition suivant la revendication 7, dans laquelle (b) est Metarhizium anisopliae.

9. Composition suivant la revendication 7, dans laquelle le champignon est Paecilomyces fumosoroseus.

10. Composition suivant la revendication 7, dans laquelle (b) est Verticillium lecanii.

11. Utilisation d'une composition suivant les revendications 1 à 10 pour lutter contre des blattes.
